# EUROPÄISCHE PATENTANMELDUNG

(11) **EP 2 014 916 A2**
(43) Veröffentlichungstag der Anmeldung: **14.01.2009**
(21) Anmeldenummer: 08004993.5
(22) Anmeldetag: 18.03.2008
(51) Int. Cl.: F03D 7/04, F03D 11/00

(54) **Verfahren und Vorrichtung zur Ermittlung einer Belastung einer Windenergieanlage**

(30) Priorität: 06.07.2007 DE 102007031969
(71) Anmelder: Nordex Energy GmbH, 22848 Norderstedt (DE)
(72) Erfinder: Voss, Eberhard, 18233 Jörnstorf (DE); Schmidt, Gunnar, 27404 Frankenborstel (DE); Thulke, Matthias, 12587 Berlin (DE)
(74) Vertreter: Schildberg, Peter

(57) **Zusammenfassung**

Verfahren zur Ermittlung einer Belastung einer Windenergieanlage mit den folgenden Schritten:
- Vorgeben einer Zuordnungsvorschrift, die jedem Wertepaar aus einem Wert für eine Windgeschwindigkeit und einem Wert für eine Beschleunigung einer Komponente der Windenergieanlage einen Kennwert für eine Belastung der Windenergieanlage zuordnet,
- Bestimmen eines Wertes, der eine gemessene Windgeschwindigkeit v repräsentiert,
- Bestimmen eines Wertes, der eine gemessene Beschleunigung a einer Komponente der Windenergieanlage repräsentiert,
- Anwenden der Zuordnungsvorschrift auf das Wertepaar aus dem Wert für die gemessene Windgeschwindigkeit v und dem Wert für die gemessene Beschleunigung a zur Ermittlung des Kennwerts für die Belastung.

## Beschreibung

Die Erfindung betrifft ein Verfahren und eine Vorrichtung zur Ermittlung einer Belastung einer Windenergieanlage.

Windenergieanlagen sind im Betrieb großen mechanischen Belastungen ausgesetzt, die im Extremfall zu einer unmittelbaren Zerstörung einer Komponente der Windenergieanlage oder zu einer langfristigen Schädigung von Komponenten durch Materialermüdung führen können. Um derartige Überlastungen zu vermeiden, ist beim Betrieb der Anlagen dafür Sorge zu tragen, daß die Auslegungslasten der Komponenten eingehalten werden. Grundlage dafür ist eine genaue Kenntnis der im Betrieb tatsächlich auftretenden Lasten der einzelnen Komponenten.

Im einfachsten Fall können die auftretenden Belastungen durch Messung einer Windgeschwindigkeit erfaßt werden. Um eine Schädigung der Windenergieanlage zu vermeiden, kann eine Abschaltwindgeschwindigkeit definiert werden, bei der geeignete Schutzmaßnahmen, beispielsweise ein Herunterfahren der Windenergieanlage, ausgeführt werden. Bei dieser Vorgehensweise handelt es sich jedoch um eine relativ grobe Abschätzung der tatsächlich auftretenden Belastungen, die den tatsächlichen Verhältnissen einer individuellen Windenergieanlage nur bedingt Rechnung tragen kann.

Um ein genaueres Bild von den tatsächlich auftretenden Belastungen zu erhalten, ist es bekannt, eine unmittelbare Messung der Belastungen einzelner Komponenten vorzunehmen. Hierzu können beispielsweise Dehnungsmeßstreifen in den Turm oder die Rotorblätter einer Windenergieanlage eingefügt werden, die eine Verformung der jeweiligen Komponenten erfassen können. Diese individuellen Meßdaten der tatsächlich auftretenden Belastungen können vielfältig genutzt werden, beispielsweise um die richtige Dimensionierung einzelner Komponenten der Windenergieanlage zu überprüfen und an die tatsächlich auftretenden Belastungen anpaßte Wartungsintervalle festzulegen. Außerdem kann die Betriebsdauer und die "Aggressivität" der Betriebsführung belastungsabhängig gewählt werden. Bleiben die gemessenen Belastungen beispielsweise hinter den bei der Auslegung der Windenergieanlage zugrundegelegten Werten zurück, kann die Lebensdauer verlängert werden und/oder eine materialschonende Betriebsführung kann zugunsten einer höheren Energieausbeute angepaßt werden. Die unmittelbare Messung der auftretenden Belastungen ist jedoch sehr aufwendig und insbesondere über längere Zeiträume schwierig, unter anderem weil es den verwendeten Dehnungsmeßstreifen an der erforderlichen Langzeitstabilität mangelt.

Als Alternative zu einer unmittelbaren Messung der Belastungen ist aus EP 1 674 724 A2 ein Verfahren zur Messung und Auswertung von Belastungen einer Windenergieanlage bekannt. Bei dem bekannten Verfahren werden Beschleunigungen des Turmkopfs mit Hilfe von Beschleunigungssensoren, die an der Grundplatte einer Gondel befestigt sind, gemessen. Die gemessenen Beschleunigungsdaten werden in Bewegungsdaten des Turmkopfs umgerechnet, auf deren Grundlage eine Bestimmung der aufgetretenen Lasten erfolgt. Daraus kann auf eine Schädigung oder Ermüdung der den ermittelten Lasten ausgesetzten Bauteile geschlossen werden.

Davon ausgehend ist es die Aufgabe der Erfindung, ein Verfahren und eine Vorrichtung zur Ermittlung einer Belastung einer Windenergieanlage anzugeben, das oder die eine genauere Bestimmung der auftretenden Lasten mit einfachen Mitteln ermöglicht.

Diese Aufgabe wird gelöst durch das Verfahren nach Anspruch 1. Vorteilhafte Ausgestaltungen sind in den Unteransprüchen angegeben.

Das Verfahren dient zur Ermittlung einer Belastung einer Windenergieanlage und weist die folgenden Schritte auf:
- Vorgeben einer Zuordnungsvorschrift, die jedem Wertepaar aus einem Wert für eine Windgeschwindigkeit und einem Wert für eine Beschleunigung einer Komponente der Windenergieanlage einen Kennwert für eine Belastung der Windenergieanlage zuordnet,
- Bestimmen eines Wertes, der eine gemessene Windgeschwindigkeit v repräsentiert,
- Bestimmen eines Wertes, der eine gemessene Beschleunigung a einer Komponente der Windenergieanlage repräsentiert, und
- Anwenden der Zuordnungsvorschrift auf das Wertepaar aus dem Wert für die gemessene Windgeschwindigkeit v und dem Wert für die gemessene Beschleunigung a zur Ermittlung des Kennwerts für die Belastung.

Die Erfindung beruht auf der Erkenntnis, daß die Ermittlung einer Belastung einer Windenergieanlage allein aufgrund von gemessenen Beschleunigungswerten eine zu starke Vereinfachung der komplizierten mechanischen und aerodynamischen Verhältnisse einer Windenergieanlage bedeutet. Eine eindeutige Zuordnung einer Belastung zu einem bestimmten Beschleunigungswert ist im allgemeinen nicht möglich. Darum wird zusätzlich zur Messung einer Beschleunigung auch eine Messung einer Windgeschwindigkeit vorgenommen, und beide Meßgrößen fließen in die Berechnung des Kennwerts für eine Belastung der Windenergieanlage ein. Der Kennwert kann sich dabei auf eine bestimmte Komponente der Windenergieanlage beziehen, beispielsweise auf den Turm der Windenergieanlage, auf ein Rotorblatt, den Triebstrang, die Gondel oder das Fundament der Windenergieanlage. Durch die Berücksichtigung einer gemessenen Beschleunigung und einer gemessenen Windgeschwindigkeit wird eine wesentlich genauere Bestimmung der Belastung möglich. Der dazu erforderliche Aufwand ist gering, denn eine Messung einer Bescheunigung ist einfach und ohne weiteres möglich, während eine Messung der Windgeschwindigkeit in der Regel zur Steuerung der Windenergieanlage ohnehin erfolgt.

Die Bestimmung des eine gemessene Windgeschwindigkeit v repräsentierenden Wertes und des eine gemessene Beschleunigung a einer Komponente der Windenergieanlage repräsentierenden Wertes kann auf beliebige Art und Weise erfolgen, beispielsweise durch Bilden eines gewichteten Mittelwertes eines Betrags der jeweiligen Meßgröße. Es können auch andere statistische Auswertungsverfahren auf die Meßgröße angewendet oder unterschiedliche statistische Kenngrößen einer Meßgröße miteinander kombiniert werden, um die repräsentierenden Werte zu erhalten. Durch eine statistische Auswertung der Meßgröße können repräsentierende Werte ermittelt werden, die für die Ermittlung der tatsächlich auftretenden Belastungen eine hohe Aussagekraft haben.

In einer Ausgestaltung wird der Wert, der die gemessene Windgeschwindigkeit v repräsentiert und/oder der Wert, der die gemessene Beschleunigung a repräsentiert, durch Bilden eines Mittelwerts der jeweiligen gemessenen Größe über ein vorgegebenes Zeitintervall bestimmt.

In einer Ausgestaltung wird der Wert, der die gemessene Windgeschwindigkeit v repräsentiert und/oder der Wert, der die gemessene Beschleunigung a repräsentiert, durch Berechnung einer Standardabweichung der jeweiligen gemessenen Größe über ein vorgegebenes Zeitintervall bestimmt.

In den beiden letztgenannten Ausgestaltungen kann das Zeitintervall beispielsweise eine Dauer von 10 Minuten aufweisen, um eine ausreichende zeitliche Auflösung zu erhalten.

In einer Ausgestaltung wird für die Mittelwertbildung und/oder für die Berechnung der Standardabweichung der gemessenen Windgeschwindigkeit v ein längeres oder kürzeres Zeitintervall vorgegeben als für die Mittelwertbildung bzw. für die Berechnung der Standardabweichung der gemessenen Beschleunigung a. Dadurch können beide Meßgrößen mit einer jeweils abgestimmten zeitlichen Auflösung berücksichtigt werden.

Gemäß einer Ausgestaltung erfolgt das Messen der Beschleunigung a mit Beschleunigungssensoren, die im Bereich des Turmkopfs der Windenergieanlage angeordnet sind. Dadurch kann eine Bewegung des Turmkopfs erfaßt werden, wobei für jede Bewegungsrichtung ein separater Beschleunigungssensor vorgesehen sein kann.

In einer Ausgestaltung wird beim Bestimmen des Wertes, der eine gemessene Beschleunigung a einer Komponente der Windenergieanlage repräsentiert, über unterschiedliche Raumrichtungen der Beschleunigung gemittelt. Alternativ kann eine separate Auswertung für einzelne Raumrichtungen erfolgen, um die Belastungen richtungsabhängig auswerten zu können. Durch die Mittelung über unterschiedliche Raumrichtungen kann die Auswertung jedoch vereinfacht werden.

Gemäß einer Ausgestaltung mißt ein Beschleunigungssensor eine Torsionsbeschleunigung im Bereich des Turmkopfs der Windenergieanlage. Dadurch kann auf einfache Weise eine Torsionsbewegung bzw. -schwingung des Turms der Windenergieanlage gemessen werden.

Gemäß einer Ausgestaltung ist der Kennwert ein Zahlenwert, der die Belastung der Komponente der Windenergieanlage quantitativ angibt. Eine quantitative Bestimmung der Belastung erlaubt eine besonders differenzierte Auswertung.

Gemäß einer Ausgestaltung nimmt der Kennwert nur zwei unterschiedliche Werte an, wobei ein erster Wert eine zulässige Belastung und ein zweiter Wert eine unzulässige Belastung der Komponente der Windenergieanlage anzeigt. In diesem Fall ist die Auswertung besonders einfach und der Kennwert gibt eine Überlastung der jeweiligen Komponente der Windenergieanlage unmittelbar an.

In einer Ausgestaltung erfolgt eine Auswertung der ermittelten Kennwerte über lange Zeiträume, um eine Materialermüdung zu bestimmen. Insbesondere in Kombination mit einem quantitativen Kennwert für die Belastung können aussagekräftige Daten über die Materialermüdung erhalten werden. Eine Schädigung oder ein drohendes Versagen der jeweiligen Komponente kann dadurch frühzeitig erkannt und unter Umständen einfach behoben bzw. abgewendet werden.

Gemäß einer Ausgestaltung wird ein ermittelter Kennwert beim Betreiben der Windenergieanlage ausgewertet, um einen Sollwert für den Betrieb der Windenergieanlage vorzugeben. Die Steuerung bzw. Regelung der Windenergieanlage erfolgt in diesem Fall in Abhängigkeit von der ermittelten Belastung. Beispielsweise kann das Vorgeben einer Abschaltwindgeschwindigkeit durch das Vorgeben einer maximalen Belastung ergänzt oder ersetzt werden. Die Effizienz des Betriebs der Windenergieanlage kann dadurch gesteigert werden. Bei dem vorgegebenen Sollwert kann es sich beispielsweise um eine Leistung, eine Generatordrehzahl oder ein Drehmoment handeln.

In einer Ausgestaltung wird die vorgegebene Zuordnungsvorschrift mit Hilfe einer Computersimulation, die die mechanischen und aerodynamischen Eigenschaften der Windenergieanlage berücksichtigt, ermittelt. Grundsätzlich kann die Zuordnung einer Belastung zu einem Wertepaar, das auf einer gemessenen Windgeschwindigkeit v und einer gemessenen Beschleunigung a beruht, auf beliebige Art und Weise erfolgen, beispielsweise auf Grundlage von Erfahrungswerten. Es ist jedoch auch möglich, in einer Computersimulation unterschiedliche Betriebszustände und Randbedingungen zu untersuchen und die auftretenden Belastungen in Abhängigkeit von den später gemessenen Werten für die Windgeschwindigkeit v und die Beschleunigung a zu berechnen. Mit Hilfe einer derartigen Computersimulation kann eine sehr detaillierte und genaue Zuordnungsvorschrift bestimmt werden. Ebenfalls möglich ist, die Computersimulation auf bestimmte Wertepaare zu beschränken und die Zuordnungsvorschrift durch Interpolation zwischen diesen Werten festzulegen.

Alternativ zu einer Computersimulation im Vorfeld kann die Zuordnung auch durch eine computerbasierte Berechnung während des Anlagenbetriebs ausgeführt werden. In diesem Fall ist vorgesehen, daß die vorgegebene Zuordnungsvorschrift in Form eines Computerprogramms hinterlegt ist, das die gemessenen Werte für die Beschleunigung a und die Windgeschwindigkeit v während des Betriebs der Windenergieanlage auswertet. Es erfolgt somit eine fortlaufende Auswertung der gemessenen Beschleunigungs- und Windgeschwindigkeitswerte "in Echtzeit", um den Kennwert für die Belastung zu ermitteln.

Gemäß einer Ausgestaltung wird die vorgegebene Zuordnungsvorschrift durch Auswerten von gemessenen Belastungswerten ermittelt oder verifiziert. Beispielsweise können Dehnungsmeßstreifen verwendet werden, um bei unterschiedlichen Betriebsbedingungen die tatsächlich auftretenden Belastungen zu messen und zu protokollieren. Auf Grundlage der protokollierten Meßwerte kann eine Zuordnungsvorschrift definiert werden, die für den jeweiligen Anlagentyp oder die individuelle Anlage charakteristisch ist. Eine Auswertung entsprechender gemessener Belastungswerte kann auch zum Verifizieren einer auf Grundlage einer Computersimulation vorgegebenen Zuordnungsvorschrift dienen.

In einer Ausgestaltung ist die Zuordnungsvorschrift von mindestens einem weiteren Parameter, der einen Betriebszustand oder eine Betriebsbedingung der Windenergieanlage beschreibt, abhängig. Der weitere Parameter kennzeichnet eine Größe, die die zu ermittelnde Belastung beeinflußt. Dies kann beispielsweise ein Blattanstellwinkel eines Rotorblatts, ein Generator- oder Rotordrehmoment, die vom Generator erzeugte elektrische Leistung oder eine äußere Bedingung, wie beispielsweise eine Umgebungstemperatur, der Luftdruck oder die Luftfeuchtigkeit sein. Die Berücksichtigung eines derartigen Parameters in der Zuordnungsvorschrift erlaubt eine noch genauere Bestimmung der Belastung.

Die obige Aufgabe wird ebenfalls gelöst durch die Windenergieanlage mit den Merkmalen des Anspruchs 16. Vorteilhafte Ausgestaltungen sind in den sich anschließenden Unteransprüchen angegeben.

Die erfindungsgemäße Windenergieanlage hat
- Mittel zum Messen einer Windgeschwindigkeit v,
- Mittel zum Messen einer Beschleunigung a einer Komponente der Windenergieanlage, und
- eine Datenverarbeitungseinheit, die einen Eingang, der mit den Mitteln zum Messen der Windgeschwindigkeit v verbunden ist und einen Eingang, der mit den Mitteln zum Messen der Beschleunigung a verbunden ist, aufweist, und mit der ein Wert, der die gemessene Windgeschwindigkeit v repräsentiert, und ein Wert, der die gemessene Beschleunigung a repräsentiert, bestimmbar ist, und die dem Wertepaar aus dem Wert für die Windgeschwindigkeit v und dem Wert für die Beschleunigung a einen Kennwert für eine Belastung der Windenergieanlage zuordnen und den Kennwert für eine nachfolgende Auswertung verfügbar machen kann, wobei in der Datenverarbeitungseinheit eine Zuordnungsvorschrift hinterlegt ist, die jedem Wertepaar aus einem Wert für eine Windgeschwindigkeit und einem Wert für eine Beschleunigung einer Komponente der Windenergieanlage einen Kennwert für eine Belastung der Windenergieanlage zuordnet.

Die Windenergieanlage ist durch die Datenverarbeitungseinheit mit der darin hinterlegten Zuordnungsvorschrift insbesondere geeignet, das Verfahren nach Anspruch 1 auszuführen. Die Datenverarbeitungseinheit kann dabei Bestandteil einer zentralen Steuereinheit, wie beispielsweise eines Steuerrechners, sein. Die darin hinterlegte Zuordnungsvorschrift kann beispielsweise in geeigneten Speicherbereichen oder auf einem Datenträger gespeichert sein. Die Datenverarbeitungseinheit kann auf Grundlage der gemessenen Daten zur Windgeschwindigkeit v und Beschleunigung a eine Belastung der Windenergieanlage ermitteln und einen diese Belastung repräsentierenden Kennwert für eine nachfolgende Auswertung verfügbar machen. Die nachfolgende Auswertung kann dabei sowohl unmittelbar auf die Betriebsführung der Windenergieanlage zurückwirken als auch eine vom unmittelbaren Betrieb unabhängige langfristige Auswertung sein.

Gemäß einer Ausgestaltung weisen die Mittel zum Messen der Beschleunigung a mindestens einen Beschleunigungssensor auf, der im Bereich des Turmkopfes der Windenergieanlage angeordnet ist. Grundsätzlich können Beschleunigungen beliebiger Komponenten ausgewertet werden, beispielsweise durch Plazieren eines Beschleunigungssensors in einem Rotorblatt einer Windenergieanlage. Bevorzugt wird die Auswertung jedoch auf die Beschleunigung des Turmkopfes bezogen, um eine Belastung des Turms der Windenergieanlage zu ermitteln.

Gemäß einer Ausgestaltung ist einer der Beschleunigungssensoren ein Torsionsbeschleunigungssensor, der im Bereich des Turmkopfes der Windenergieanlage angeordnet ist. Somit kann auch eine Torsionsbewegung erfaßt werden.

Wie bei den entsprechenden Ausgestaltungen des erfindungsgemäßen Verfahrens bereits erläutert, kann der Kennwert ein Zahlenwert sein, der die Belastung der Komponente der Windenergieanlage quantitativ angibt oder der Kennwert kann nur zwei unterschiedliche Werte annehmen, wobei ein erster Wert eine zulässige Belastung und zweiter Wert eine unzulässige Belastung der Komponente der Windenergieanlage anzeigt.

In einer Ausgestaltung weist die Windenergieanlage eine Betriebsführung mit einer Regelung für den Betrieb der Windenergieanlage auf und die Datenverarbeitungseinheit kann auf Grundlage des Kennwerts für die Belastung einen Sollwert für den Betrieb der Windenergieanlage vorgeben, wobei die Regelung einen Eingang für den Sollwert aufweist. Bei dem Sollwert kann es sich beispielsweise um eine Leistung, eine Drehzahl oder einen Drehmoment handeln.

In einer Ausgestaltung kann die Windenergieanlage das Verfahren nach einem der Ansprüche 1 bis 12 ausführen. Die Ausführung des Verfahrens kann dabei insbesondere durch eine entsprechende Ausgestaltung eines Programms der Datenverarbeitungseinheit ermöglicht werden. Das Verfahren wird nachfolgend anhand von in Figuren dargestellten Ausführungsbeispielen näher erläutert.

Es zeigen:
- Fig. 1: ein Blockdiagramm zum erfindungsgemäßen Verfahren;
- Fig. 2: ein Diagramm zur Abhängigkeit einer Belastung von einer Windgeschwindigkeit;
- Fig. 3: ein Diagramm zu einer Zuordnungsvorschrift, die jedem Wertepaar für eine Beschleunigung und eine Geschwindigkeit einen Kennwert zuordnet; und
- Fig. 4: eine vereinfachte schematische Darstellung einer Windenergieanlage, die das erfindungsgemäße Verfahren ausführen kann.

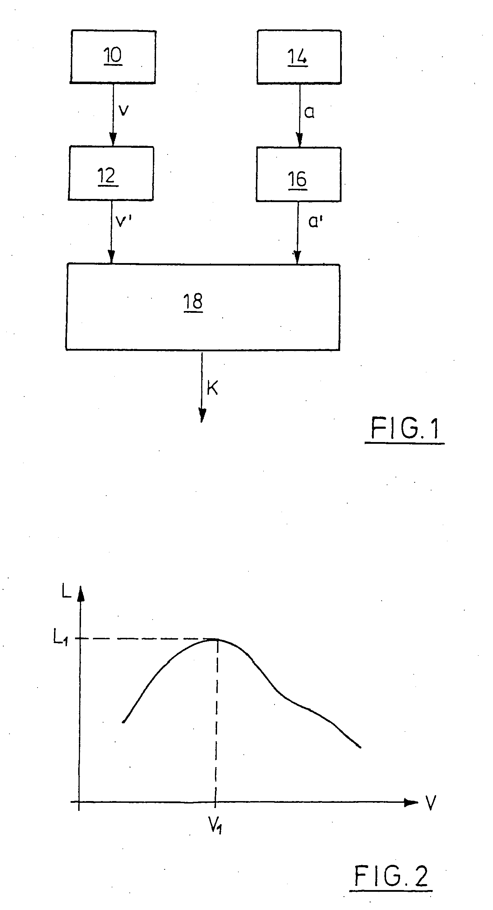

Das in der Fig. 1 dargestellte Blockdiagramm zeigt die wesentlichen Schritte des erfindungsgemäßen Verfahrens. In einem ersten, durch den Block 10 veranschaulichten Schnitt erfolgt eine kontinuierliche Messung der Windgeschwindigkeit v. Wie durch den Pfeil angedeutet, wird der Meßwert für die Windgeschwindigkeit v an den Block 12 weitergeleitet, wo ein Wert v' bestimmt wird, der die gemessene Windgeschwindigkeit repräsentiert. Im dargestellten Ausführungsbeispiel erfolgt dazu in dem Block 12 eine Mittelwertbildung des Betrags der gemessenen Windgeschwindigkeit v für ein vorgegebenes Zeitintervall. In dem Block 14 erfolgt eine kontinuierliche Messung einer Beschleunigung a einer Komponente der Windenergieanlage. Der Meßwert für die Beschleunigung a wird an den Block 16 weitergegeben, wie durch den Pfeil angedeutet. In dem Block 16 wird ein Wert a' bestimmt, der durch eine betragsmäßige Mittelwertbildung der gemessenen Beschleunigung a für ein vorgegebenes Zeitintervall ermittelt wird. Die beiden die jeweilige Meßgrößen repräsentierenden Werte v' und a' werden dem Block 18 als Eingangsgrößen zugeführt. In dem Block 18 ist eine Zuordnungsvorschrift hinterlegt, die jedem Wertepaar aus einem Wert v' für eine Windgeschwindigkeit und einem Wert a' für eine Beschleunigung einer Komponente der Windenergieanlage einen Kennwert K für eine Belastung der Windenergieanlage zuordnet. Block 18 macht den Kennwert K für eine nachfolgende Auswertung verfügbar. Der Kennwert K gibt eine Belastung der Komponente der Windenergieanlage an.

In der Fig. 2 ist beispielhaft dargestellt, wie eine Belastung L einer Komponente einer Windenergieanlage von einer Windgeschwindigkeit v abhängt. Es zeigt sich, daß der Zusammenhang zwischen der Belastung L und der Windgeschwindigkeit v kompliziert ist. Bei einer bestimmten Windgeschwindigkeit v₁ erreicht die Belastung einen Maximalwert L₁. Nimmt die Windgeschwindigkeit v über den Wert v₁ hinaus weiter zu, nimmt die Belastung L der Komponente der Windenergieanlage überraschenderweise ab. Ein derartiger Zusammenhang existiert beispielsweise für die Belastung des Turm einer Windenergieanlage, wenn beim Betrieb der Windenergieanlage bei einer Windgeschwindigkeit v₁ ein Sollwert, beispielsweise für die von der Windenergieanlage erzeugte Leistung, erreicht wird und durch Variieren des Blatteinstellwinkels bei weiter steigenden Windgeschwindigkeiten der von dem Rotor auf den Turm einer Windenergieanlage ausgeübte Schub zurückgeht. Das Beispiel macht deutlich, daß die tatsächlich auftretenden Belastungen in komplizierter Weise von unterschiedlichen Parametern des Betriebs der Windenergieanlage abhängen. Eine wichtige Rolle spielen insbesondere Turbulenzen, die durch eine Messung der Windgeschwindigkeit allein nicht erfaßt werden können. Auch auf Grundlage einer Messung einer Beschleunigung, die insbesondere eine dynamische Belastung durch eine Schwingungsbewegung einer entsprechenden Komponente der Windenergieanlage widerspiegelt, kann ebenfalls keine zuverlässige Aussage über die tatsächlich auftretende Belastung der Komponente ermittelt werden.

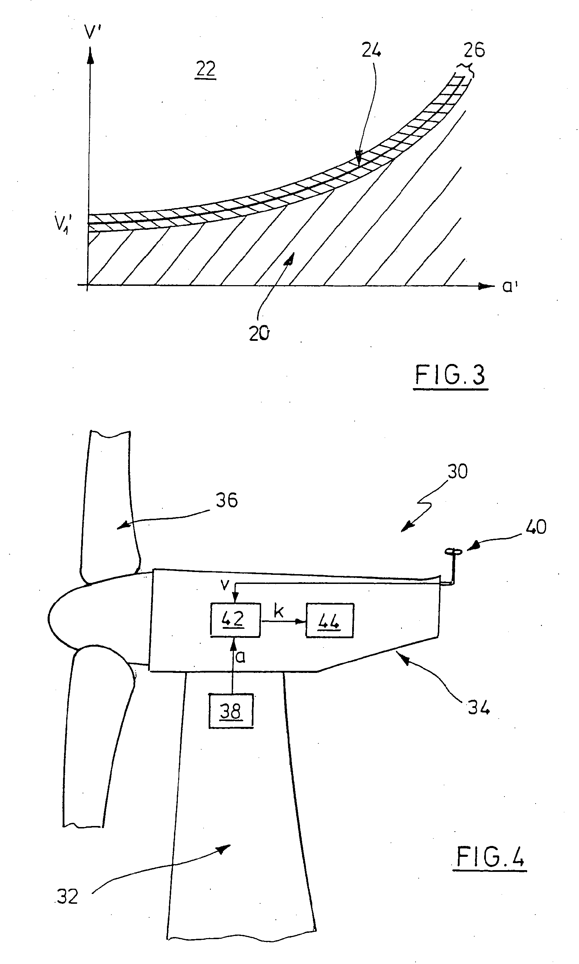

Daher wird bei der Erfindung sowohl eine gemessene Beschleunigung als auch eine gemessene Windgeschwindigkeit ausgewertet. In der Fig. 3 ist dargestellt, wie die Zuordnungsvorschrift aus Block 18 der Fig. 1 jedem Wertepaar aus einem Wert a' für die gemessene Beschleunigung und einem Wert v' für die gemessene Windgeschwindigkeit einen Kennwert für die Belastung zuordnet. Im Beispiel der Fig. 3 ist in der Zeichenebene der zweiparametrige Wertebereich der Zuordnungsvorschrift dargestellt. Die Werte a' für die Beschleunigung finden sich auf der horizontalen Achse, die Werte für die Windgeschwindigkeit v' sind auf der vertikalen Achse aufgetragen. Mit Hilfe einer Computersimulation ist jedem Wertepaar a', v' eine Belastung zugeordnet. Durch Festlegen einer Obergrenze für diese Belastung erhält man eine Kurve 24, die in dem dargestellten Wertebereich Wertepaare eines Bereichs 22, der noch zulässige Belastungen der betrachteten Komponente der Windenergieanlage zugeordnet sind, von einem Wertebereich 20 trennt, in dem sich Wertepaare befinden, die zu einer unzulässigen Belastung der betrachteten Komponenten der Windenergieanlage führen. Die beiden Wertebereiche 20 und 22 werden durch den Verlauf der Kurve 24 voneinander getrennt. Die Kurve 24 wird von einem Toleranzbereich 26 umgeben, in dem sich die auftretenden Belastungen in einem Grenzbereich zwischen zulässigen und unzulässigen Werten befinden. Beispielsweise kann vorgesehen sein, Wertepaare aus dem Toleranzbereich 26 für einen bestimmten, vorgegebenen Zeitraum als zulässig zu betrachten.

Im Beispiel der Fig. 3 ordnet die veranschaulichte Zuordnungsvorschrift jedem Wertepaar a', v' somit einen von drei möglichen Kennwerten K zu. Die Werte, die der Kennwert K annehmen kann, sind "zulässig", "unzulässig" und "im Toleranzbereich". Alternativ kann die Zuordnungsvorschrift jedem Wertepaar a', v' auch nur zwei Werte, "zulässig" und "unzulässig", oder einen Zahlenwert zuordnen, der die Belastung der betrachteten Komponente quantitativ angibt.

Eine erfindungsgemäße Windenergieanlage ist in der Fig. 4 vereinfacht dargestellt. Die Windenergieanlage 30 weist einen Turm 32 auf, dessen oberes Ende in der Figur angedeutet ist. Der Turm trägt eine Gondel 34, an der ein Rotor mit Rotorblättern 36 befestigt ist. Im Bereich des Kopfs des Turms 32 sind Beschleunigungssensoren 38 angeordnet, die einen Meßwert für die Beschleunigung a des Turmkopfs liefern. Ein Windmeßgerät 40 ist am hinteren oberen Ende der Gondel 34 angeordnet und liefert einen Meßwert für eine Windgeschwindigkeit v. Die Meßwerte für die Beschleunigung a und Windgeschwindigkeit v werden an eine Datenverarbeitungseinheit 42 weitergeleitet, die auf die in der Fig. 1 beschriebenen Art und Weise ausgehend von den Meßwerten einen Kennwert K für eine Belastung des Windenergieanlagenturms ermittelt. Der Kennwert K wird an einem Ausgang der Datenverarbeitungseinheit 42 verfügbar gemacht und im dargestellten Beispiel an eine Betriebsführung 44 weitergeleitet. Ausgehend von dem Kennwert K wird ein Sollwert für den Betrieb der Windenergieanlage festgelegt und von der Betriebsführung 44 zur Steuerung des Betriebs der Windenergieanlage verwendet.

## Patentansprüche

1. Verfahren zur Ermittlung einer Belastung einer Windenergieanlage (30) mit den folgenden Schritten:
- Vorgeben einer Zuordnungsvorschrift, die jedem Wertepaar aus einem Wert für eine Windgeschwindigkeit und einem Wert für eine Beschleunigung einer Komponente der Windenergieanlage einen Kennwert (K) für eine Belastung der Windenergieanlage zuordnet,
- Bestimmen eines Wertes (v'), der eine gemessene Windgeschwindigkeit v repräsentiert,
- Bestimmen eines Wertes (a'), der eine gemessene Beschleunigung a einer Komponente der Windenergieanlage repräsentiert,
- Anwenden der Zuordnungsvorschrift auf das Wertepaar aus dem Wert (v') für die gemessene Windgeschwindigkeit v und dem Wert (a') für die gemessene Beschleunigung a zur Ermittlung des Kennwerts (K) für die Belastung.

2. Verfahren nach Anspruch 1, **dadurch gekennzeichnet, daß** der Wert (v'), der die gemessene Windgeschwindigkeit v repräsentiert und/oder der Wert (a'), der die gemessene Beschleunigung a repräsentiert, durch Bilden eines Mittelwerts der jeweiligen gemessenen Größe (a, v) über ein vorgegebenes Zeitintervall bestimmt wird.

3. Verfahren nach Anspruch 1, **dadurch gekennzeichnet, daß** der Wert (v'), der die gemessene Windgeschwindigkeit v repräsentiert und/oder der Wert (a'), der die gemessene Beschleunigung a repräsentiert, durch Berechnung einer Standardabweichung der jeweiligen gemessenen Größe (a, v) über ein vorgegebenes Zeitintervall bestimmt wird.

4. Verfahren nach Anspruch 2 oder 3, **dadurch gekennzeichnet, daß** für die Mittelwertbildung und/oder für die Berechnung der Standardabweichung der gemessenen Windgeschwindigkeit v ein längeres oder kürzeres Zeitintervall vorgegeben wird, als für die Mittelwertbildung bzw. die Berechnung der Standardabweichung der gemessenen Beschleunigung a.

5. Verfahren nach einem der Ansprüche 1 bis 4, **dadurch gekennzeichnet, daß** das Messen der Beschleunigung a mit einem oder mehreren Beschleunigungssensoren (38) erfolgt, die im Bereich des Turmkopfs der Windenergieanlage (30) angeordnet sind.

6. Verfahren nach einem der Ansprüche 1 bis 5, **dadurch gekennzeichnet, daß** bei der Bestimmung des Wertes (a'), der eine Beschleunigung a repräsentiert, über unterschiedliche Raumrichtungen der Beschleunigung gemittelt wird.

7. Verfahren nach einem der Ansprüche 1 bis 6, **dadurch gekennzeichnet, daß** ein Beschleunigungssensor (38) eine Torsionsbeschleunigung im Bereich des Turmkopfs der Windenergieanlage (30) mißt.

8. Verfahren nach einem der Ansprüche 1 bis 7, **dadurch gekennzeichnet, daß** der Kennwert (K) ein Zahlenwert ist, der die Belastung der Komponente der Windenergieanlage (30) quantitativ angibt.

9. Verfahren nach einem der Ansprüche 1 bis 8, **dadurch gekennzeichnet, daß** der Kennwert (K) nur zwei unterschiedliche Werte annimmt, wobei ein erster Wert eine zulässige Belastung und ein zweiter Wert eine unzulässige Belastung der Komponente der Windenergieanlage (30) anzeigt.

10. Verfahren nach einem der Ansprüche 1 bis 9, **dadurch gekennzeichnet, daß** eine Auswertung der ermittelten Kennwerte (K) über lange Zeiträume erfolgt, um eine Materialermüdung zu bestimmen.

11. Verfahren nach einem der Ansprüche 1 bis 10, **dadurch gekennzeichnet, daß** ein ermittelter Kennwert (K) beim Betreiben der Windenergieanlage (30) ausgewertet wird, um einen Sollwert für den Betrieb der Windenergieanlage (30) vorzugeben.

12. Verfahren nach einem der Ansprüche 1 bis 11, **dadurch gekennzeichnet, daß** die vorgegebene Zuordnungsvorschrift mit Hilfe einer Computersimulation, die die mechanischen und aerodynamischen Eigenschaften der Windenergieanlage (30) berücksichtigt, ermittelt wird.

13. Verfahren nach einem der Ansprüche 1 bis 12, **dadurch gekennzeichnet, daß** die vorgegebene Zuordnungsvorschrift in Form eines Computerprogramms hinterlegt ist, das die gemessenen Werte für die Beschleunigung (a) und die Windgeschwindigkeit (v) während des Betriebs der Windenergieanlage auswertet.

14. Verfahren nach einem der Ansprüche 1 bis 13, **dadurch gekennzeichnet, daß** die vorgegebene Zuordnungsvorschrift durch Auswerten von gemessenen Belastungswerten ermittelt oder verifiziert wird.

15. Verfahren nach einem der Ansprüche 1 bis 14, **dadurch gekennzeichnet, daß** die Zuordnungsvorschrift von mindestens einem weiteren Parameter, der einen Betriebszustand oder eine Betriebsbedingung der Windenergieanlage beschreibt, abhängig ist.

16. Windenergieanlage (30) mit
- Mitteln (40) zum Messen einer Windgeschwindigkeit v,
- Mitteln (38) zum Messen einer Beschleunigung a einer Komponente der Windenergieanlage (30), und
- einer Datenverarbeitungseinheit (42), die einen Eingang, der mit den Mitteln zum Messen der Windgeschwindigkeit v verbunden ist und einen Eingang, der mit den Mitteln zum Messen der Beschleunigung a verbunden ist, aufweist, und mit der ein Wert (v'), der die gemessene Windgeschwindigkeit v repräsentiert, und ein Wert (a'), der die gemessene Beschleunigung a repräsentiert, bestimmbar ist, und die dem Wertepaar aus dem Wert (v') für die Windgeschwindigkeit v und dem Wert (a') für die Beschleunigung a einen Kennwert (K) für eine Belastung der Windenergieanlage zuordnen und den Kennwert (K) für eine nachfolgende Auswertung verfügbar machen kann, wobei in der Datenverarbeitungseinheit (42) eine Zuordnungsvorschrift hinterlegt ist, die jedem Wertepaar aus einem Wert (v') für eine Windgeschwindigkeit und einem Wert (a') für eine Beschleunigung einer Komponente der Windenergieanlage einen Kennwert (K) für eine Belastung der Windenergieanlage (30) zuordnet.

17. Windenergieanlage (30) nach Anspruch 16, **dadurch gekennzeichnet, daß** die Datenverarbeitungseinheit (42) eine Einrichtung zur Bildung eines Mittelwerts der gemessenen Windgeschwindigkeit v und/oder der gemessenen Beschleunigung a über ein vorgegebenes Zeitintervall aufweist.

18. Windenergieanlage (30) nach Anspruch 16, **dadurch gekennzeichnet, daß** die Datenverarbeitungseinheit (42) eine Einrichtung zur Berechnung einer Standardabweichung der gemessenen Windgeschwindigkeit v und/oder der gemessenen Beschleunigung a in einem vorgegebenen Zeitintervall aufweist.

19. Windenergieanlage (30) nach einem der Ansprüche 16 bis 18, **dadurch gekennzeichnet, daß** die Mittel (38) zum Messen der Beschleunigung a mindestens einen Beschleunigungssensor (38) aufweisen, der im Bereich des Turmkopfes der Windenergieanlage (30) angeordnet ist.

20. Windenergieanlage (30) nach Anspruch 19, **dadurch gekennzeichnet, daß** einer der Beschleunigungssensoren (38) ein Torsionsbeschleunigungssensor ist, der im Bereich des Turmkopfes der Windenergieanlage (30) angeordnet ist.

21. Windenergieanlage (30) nach einem der Ansprüche 16 bis 20, **dadurch gekennzeichnet, daß** der Kennwert (K), der von der Datenverarbeitungseinheit (42) verfügbar gemacht werden kann, ein Zahlenwert ist, der die Belastung der Komponente der Windenergieanlage (30) quantitativ angibt.

22. Windenergieanlage (30) nach einem der Ansprüche 16 bis 21, **dadurch gekennzeichnet, daß** der Kennwert (K), der von der Datenverarbeitungseinheit (42) verfügbar gemacht werden kann, nur zwei unterschiedliche Werte annehmen kann, wobei ein erster Wert eine zulässige Belastung und ein zweiter Wert eine unzulässige Belastung der Komponente der Windenergieanlage (30) anzeigt.

23. Windenergieanlage (30) nach einem der Ansprüche 16 bis 22, **dadurch gekennzeichnet, daß** die Windenergieanlage (30) eine Betriebsführung (44) mit einer Regelung für den Betrieb der Windenergieanlage (30) aufweist und die Datenverarbeitungseinheit auf Grundlage des Kennwerts (K) für die Belastung einen Sollwert für den Betrieb der Windenergieanlage (30) vorgeben kann, wobei die Regelung einen Eingang für den Sollwert aufweist.

24. Windenergieanlage (30) nach einem der Ansprüche 16 bis 23, **dadurch gekennzeichnet, daß** die Windenergieanlage (30) das Verfahren nach einem der Ansprüche 1 bis 14 ausführen kann.
